(19) Europäisches Patentamt / European Patent Office / Office européen des brevets

(11) **EP 4 621 873 A1**

(12) **EUROPEAN PATENT APPLICATION**
published in accordance with Art. 153(4) EPC

(43) Date of publication:
24.09.2025 Bulletin 2025/39

(21) Application number: 23892055.7

(22) Date of filing: 17.11.2023

(51) International Patent Classification (IPC):
$H01M\ 4/36^{(2006.01)}$    $H01M\ 4/38^{(2006.01)}$
$H01M\ 4/62^{(2006.01)}$    $H01M\ 10/052^{(2010.01)}$
$H01M\ 4/02^{(2006.01)}$

(52) Cooperative Patent Classification (CPC):
H01M 4/02; H01M 4/36; H01M 4/38; H01M 4/62;
H01M 10/052

(86) International application number:
PCT/KR2023/018510

(87) International publication number:
WO 2024/106992 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.11.2022 KR 20220155336

(71) Applicant: Hansol Chemical Co., Ltd
Seoul 06169 (KR)

(72) Inventors:
• GONG, Min-Kyung
  Wanju-gun, Jeollabuk-do 55321 (KR)

• PARK, Byung-Hoon
  Wanju-gun, Jeollabuk-do 55321 (KR)
• PARK, Joo-Yeon
  Wanju-gun, Jeollabuk-do 55321 (KR)
• LEE, Jong-Ha
  Wanju-gun, Jeollabuk-do 55321 (KR)
• KWON, Se-Man
  Wanju-gun, Jeollabuk-do 55321 (KR)

(74) Representative: Louis Pöhlau Lohrentz
Patentanwälte
Postfach 30 55
90014 Nürnberg (DE)

(54) **NEGATIVE ELECTRODE ACTIVE MATERIAL, METHOD FOR PREPARING SAME, AND LITHIUM SECONDARY BATTERY COMPRISING SAME**

(57) The present invention relates to a negative electrode active material, a method for preparing same and a lithium secondary battery containing same, the negative electrode active material comprising: a core including at least one metal-containing particle; a first shell surrounding the core; and a second shell surrounding the first shell, wherein the metal-containing particle includes at least any one selected from the group consisting of Mg, Al, Si, Ca, Fe, Mg, Mn, Co, Ni, Zn, and Ge.

Figure 1

EP 4 621 873 A1

## Description

## Technical Field

The present disclosure relates to a negative electrode active material, a method for preparing the same, and a lithium secondary battery including the same and, more particularly, to a negative electrode active material with a two-layer shell structure, a method for preparing the same, and a lithium secondary battery including the same having excellent initial efficiency, lifespan characteristics and output characteristics.

## Background Art

With high energy density and ease of design, lithium-ion batteries (LIBs) are used as the main power source for mobile electronic devices, and their application range is expanding further to electric vehicles or power storage devices for renewable energy.

In order to use lithium-ion batteries in new applications, continuous research on LIB materials with higher energy density, longer life, etc. is required.

Particularly, research has been conducted on various materials such as carbon, silicon, tin, and germanium for use as negative electrodes in lithium-ion batteries.

Among these, silicon-based materials have received much attention because they have a much higher energy density than currently commercialized graphite materials.

However, silicon-based negative electrodes have fatal flaws, including the formation of an unstable solid electrolyte interphase (SEI) layer due to side reactions between silicon surfaces and electrolytes, which reduces electrochemical properties, and the pulverization of electrode materials due to internal stress caused by rapid volume expansion during lithiation/delithiation.

To solve the above problem, many studies have been conducted to improve the reversibility on the surface through a variety of surface treatments for silicon-based negative electrode materials, and in particular, carbon coating on the silicon surface or combining silicon with carbon materials are being widely studied.

Nevertheless, surface treatments using carbon materials require complex and expensive processes, and although some properties of silicon-based negative electrodes are improved through surface treatments using carbon materials, the ionic conductivity of silicon-based negative electrode materials are reduced, limiting the improvement of output characteristics for implementing fast charging/discharging LIBs, which have recently been in increasing demand.

That is, it is difficult to achieve the output characteristics required for fast charging/discharging LIBs with conventional surface treatments utilizing carbon materials because the conventional methods proceed with surface treatments of silicon-carbon composites without improving the low ion conductivity of the silicon-based negative electrode materials.

Thus, there is a need for technological development for surface treatment of high-capacity silicon-based negative electrode active materials that can improve the low ion conductivity of silicon-based negative electrode materials while suppressing volume expansion of the silicon-based negative electrode materials.

[Related Art Documents]

[Patent Documents]

(Patent Document 1) Korean Patent Application Publication No. 10-2016-0104720

## Disclosure

## Technical Problem

Accordingly, the present disclosure aims to provide a negative electrode active material for secondary batteries with excellent initial efficiency, lifespan characteristics and output characteristics.

In addition, the present disclosure aims to provide a method for preparing the negative electrode active material with high efficiency and low cost.

Furthermore, the present disclosure aims to provide an electrode and a lithium secondary battery including the negative electrode active material.

However, the objectives to be achieved by the present application are not limited to the aforementioned ones, and other objectives not mentioned can be clearly understood by those skilled in the art from the following description.

**Technical Solution**

In an aspect of the present application, a negative electrode active material including: a core including at least one metal-containing particle;

a first shell surrounding the core; and
a second shell surrounding the first shell,
wherein the metal-containing particle includes at least any one selected from the group consisting of Mg, Al, Si, Ca, Fe, Mg, Mn, Co, Ni, Zn, and Ge,
is provided.

In another aspect of the present application, a method for preparing the negative electrode active material, the method including:

producing a precursor powder by spray drying a solution containing a metal-containing particle and a nano carbon particle;
primary mixing in which the precursor powder and a first amorphous carbon are mixed to produce a primary composite;
secondary mixing in which the primary composite, a second amorphous carbon, and crystalline carbon are mixed to produce a secondary composite; and
heat treating,
wherein a metal contained in the metal-containing particle is at least one selected from Si, Al, Ti, Mn, Ni, Cu, V, Zr, Mn, Co, Fe and Nb,
is provided.

In still another aspect of the present application, an electrode including the negative electrode active material is provided.

In still another aspect of the present application, a lithium secondary battery including: a negative electrode containing the negative electrode active material;

a positive electrode positioned opposite to the negative electrode; and
an electrolyte disposed between the negative electrode and the positive electrode is provided.

**Advantageous Effects**

According to a negative electrode active material of the present disclosure, a secondary battery with excellent initial efficiency, lifespan characteristics and output characteristics can be provided.

Furthermore, a negative electrode active material can be manufactured with high efficiency and low cost.

**Description of Drawings**

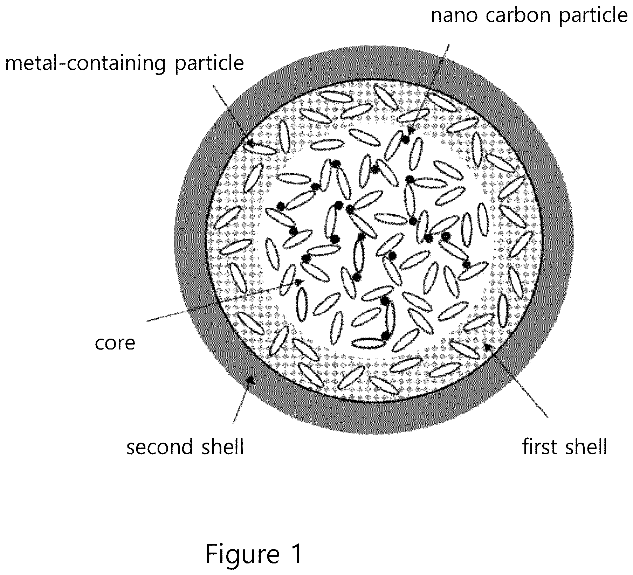

FIG. 1 is a schematic view showing a negative electrode active material having a two-layer shell structure according to an embodiment of the present disclosure.

**Best Mode**

terms and words used in this specification and claims should not be construed as limited to their ordinary or dictionary meanings. Based on the principle that the inventor(s) can appropriately define the concept of the term to explain his or her invention in the best way, the terms and words are required to be interpreted as meaning and concept consistent with the technical idea of the present disclosure.

Therefore, the configuration of the embodiments described in this specification is only one of the most preferred embodiments of the present disclosure and does not represent the entire technical idea of the present disclosure. It should be understood that at the time of filing this application, there may be various equivalents and modifications that can replace the embodiments.

In this specification, singular expressions include plural expressions, unless the context clearly indicates otherwise. In this specification, terms such as "include", "comprise", or "have" are intended to indicate the presence of implemented features, numbers, steps, components, or combinations thereof. The terms should be understood as not precluding the presence or addition of one or more other features, numbers, steps, components, or combinations thereof.

In this specification, "to" and "~" in "a to b" and "a to b" indicating numerical ranges are defined as $\geq a$ and $\leq b$

A negative electrode active material according to an aspect of the present application may include: a core including at least one metal-containing particle; a first shell surrounding the core; and a second shell surrounding the first shell.

In addition, the metal-containing particle may include at least any one selected from the group consisting of Mg, Al, Si, Ca, Fe, Mg, Mn, Co, Ni, Zn, and Ge, and may be spherical or flake-shaped.

The first shell effectively bonds the core and the second shell to stably maintain the structure of the negative electrode active material despite the volume expansion of the metal-containing particle (e.g., silicon) that occurs during charging and discharging.

In case the first shell is absent, the adhesion strength between the core and the second shell of the negative electrode active material is weakened, so that the second shell may be easily destroyed during electrode manufacturing, which may lower the processability, and electrolyte solvent molecules may be inserted through the destroyed portion, thereby reducing the electrochemical reactivity of the second shell and the core.

The second shell may effectively prevent contact between the metal-containing particle of the core and an electrolyte solvent, thereby contributing to the stable electrochemical reversibility of the metal-containing particle, and may improve the lifespan characteristics of the negative electrode active material based on the stable electrochemical stability with the electrolyte solvent at the outermost layer.

In case the second shell is absent, hydrocarbons of the first shell react with lithium ions to cause irreversible capacity, which may deteriorate the lifespan characteristics of a battery. Moreover, side reactions such as reduction and decomposition of the electrolyte may be accelerated by microscopic defects in the first shell.

In an embodiment, the metal-containing particle may be a silicon (Si)-containing particle, and the silicon (Si)-containing particle may include at least one selected from the group consisting of a silicon particle, a silicon oxide particle, a silicon carbide particle, and a silicon alloy particle.

In addition, a mean diameter (D50) of the silicon (Si)-containing particle is 50 to 200 nm, and may be represented by Formula 1 below.

$$[\text{Formula 1}] \qquad SiOx \ (0 \leq x \leq 0.5)$$

In Formula 1, when x exceeds 0.5, there may be a detrimental effect on battery capacity and efficiency. That is, lithium ions react with oxygen to form $Li_2O$, Li-silicates ($Li_xSi_yO_z$), etc., which can be irreversible. As a result, lithium ions reacting with the negative electrode material cannot return to the electrolyte or positive electrode material and are trapped inside the negative electrode, preventing the capacity from being realized and reducing the efficiency.

In addition, the silicon carbide may be, for example, SiC, and the silicon alloy may be, for example, a Si-Z alloy (wherein Z is at least one element selected from an alkali metal, an alkaline earth metal, an element of group 13, an element of group 14, a transition metal, a rare earth element, and combinations thereof, and is not Si).

The mean diameter of the silicon (Si)-containing particle was measured using a particle size analyzer (Mastersizer 3000, Malvern Panalytical) using an organic solution in which the silicon (Si)-containing particles were dispersed.

When the mean diameter of the silicon (Si)-containing particle exceeds 200 nm, high battery capacity may be achieved, but battery life may be very short, whereas when the mean diameter of the silicon (Si)-containing particle is less than 50 nm, the battery capacity and efficiency may decrease and the manufacturing cost may increase.

In an embodiment, the metal-containing particles may be included in an amount of 50 to 98 wt% based on the total weight of the core. That is, when the weight of the entire core is 100 wt%, 50 to 98 wt% of the total weight may correspond to the weight of the metal-containing particles.

In an embodiment, a mean particle size (D50) of the negative electrode active material may be 5 to 20 $\mu$m.

The mean particle size of the negative electrode active material was measured using a particle size analyzer (Mastersizer 3000, Malvern Panalytical) using an organic solution in which the negative electrode active material was dispersed.

In an embodiment, the negative electrode active material may include at least one nano carbon particle.

The nano carbon particle may be single-walled carbon nanotubes, double-walled carbon nanotubes, multi-walled carbon nanotubes, graphene, carbon black or a combination thereof.

In an embodiment, the nano carbon particles may be included in an amount of 0.5 wt% or more and 10 wt% or less based on 100 wt% of the total weight of the metal-containing particles.

When the content of the nano carbon particles falls below the content range of the present application, the electrical conductivity and porosity of the negative electrode active material may be significantly reduced, and when such a negative electrode active material is used in a secondary battery, the initial discharge capacity, initial efficiency, lifespan characteristics, and output characteristics of the battery may be degraded.

In an embodiment, the first shell may include amorphous carbon, and the second shell may include crystalline carbon.

In addition, the first shell may include a small amount of crystalline carbon, and the second shell may include a small amount of amorphous carbon.

Meanwhile, the core may additionally contain amorphous carbon.

The first shell may effectively bond the core and the second shell by including the amorphous carbon, and may stably maintain the structure of the negative electrode active material despite the volume expansion of the metal-containing particle (e.g., silicon) that occurs during charging and discharging.

The second shell, by including the crystalline carbon, may effectively prevent contact between the metal-containing particle (e.g., silicon) of the core and an electrolyte solvent, thereby contributing to the stable electrochemical reversibility of the metal-containing particle, and may improve the lifespan characteristics of the negative electrode active material based on the stable electrochemical stability with the electrolyte solvent at the outermost layer.

In an embodiment, the negative electrode active material may have a carbon content of 30 wt% or more and 85 wt% or less based on 100 wt% of the total weight of the negative electrode active material.

When the carbon content falls below the range of the present application, the electrical conductivity of the negative electrode active material may decrease and the porosity may increase. In addition, the initial efficiency, lifespan characteristics, and output characteristics of a secondary battery using the negative electrode active material may decrease.

Meanwhile, when the carbon content exceeds the range of the present application, the porosity of the negative electrode active material may decrease. In addition, the initial efficiency, lifespan characteristics, and output characteristics of a secondary battery using the negative electrode active material may decrease.

In an embodiment, the negative electrode active material may have a carbon content of the core and the first shell of 15 wt% or more and 40 wt% or less based on 100 wt% of the total weight of the negative electrode active material, and a carbon content of the second shell of 15 wt% or more and 40 wt% or less based on the total weight of the negative electrode active material.

When the carbon content of the first shell falls below the range of the present application, the bonding force between the core and the second shell may be weakened, thereby deteriorating the lifespan characteristics of a secondary battery.

In addition, when the carbon content of the first shell exceeds the range of the present application, the thickness of the first shell may increase, and the strength of the first shell and the second shell may be weakened overall.

Meanwhile, when the carbon content of the second shell falls below the range of the present application, the electrical conductivity of the negative electrode active material may decrease and the lifespan characteristics of a secondary battery may deteriorate.

In addition, when the carbon content of the second shell exceeds the range of the present application, the specific capacity may decrease and the energy density of a secondary battery may decrease.

In an embodiment, based on 100 wt% of the total weight of the negative electrode active material, the oxygen content may be 10 wt% or less.

For example, the content of oxygen may be 5 wt% or more and 10 wt% or less.

In an embodiment, the first shell may additionally include at least one metal-containing particle.

In an embodiment, the electrical conductivity of the negative electrode active material may be 17 S/cm or more and 20 S/cm or less, and the porosity of the negative electrode active material may be 20% or more and 35% or less.

When the electrical conductivity and/or porosity of the negative electrode active material exceeds or falls below the range of the present application, one or more of the initial efficiency, lifespan characteristics, and output characteristics of a secondary battery to which the negative electrode active material is applied may be degraded.

A method for preparing the negative electrode active material according to another aspect of the present application, may include: producing a precursor powder by spray drying a solution containing a metal-containing particle and a nano carbon particle; primary mixing in which the precursor powder and a first amorphous carbon are mixed to produce a primary composite; secondary mixing in which the primary composite, a second amorphous carbon, and crystalline carbon are mixed to produce a secondary composite; and heat treating.

A metal contained in the metal-containing particle may be at least one selected from Si, Al, Ti, Mn, Ni, Cu, V, Zr, Mn, Co, Fe and Nb.

The metal-containing particles provided in the step of producing the precursor powder may be prepared by being ground to have a desired mean diameter through a grinding process.

In an embodiment, each of the first and second amorphous carbons may be at least one selected from the group consisting of coal pitch, mesophase pitch, petroleum pitch, tar, coal oil, petroleum heavy oil, organic synthetic pitch, sucrose, naphthalene resin, polyvinyl alcohol resin, furfuryl alcohol resin, polyacrylonitrile resin, polyamide resin, phenolic resin, furan resin, cellulose resin, styrene resin, epoxy resin or vinyl chloride resin, block copolymer, polyol and polyimide resin

In addition, the crystalline carbon may be at least one selected from the group consisting of natural graphite, artificial graphite, expanded graphite, graphene, carbon black, and fullerene.

Natural graphite is graphite that occurs naturally, and includes flake graphite, high crystalline graphite, and amorphous graphite (microcrystalline or cryptocrystalline graphite). Artificial graphite is artificially synthesized graphite, made by heating amorphous carbon at high temperatures, and includes primary graphite (electrographite), secondary graphite, and graphite fiber.

Expanded graphite is a material in which a chemical substance such as an acid or alkali is intercalated between layers of graphite and heated to expand the vertical layers of the molecular structure. Graphene contains a single layer or multiple single layers of graphite.

Carbon black is less regularly crystalline than graphite, and may be converted into graphite when heated at about 3,000 °C for a long time. Fullerene is a carbon mixture containing at least 3 wt% fullerene, a polyhedral bundle-shaped compound consisting of 60 or more carbon atoms. The first carbon-based material may use one type of crystalline carbon alone or a combination of two or more types. For example, natural graphite or artificial graphite may be used. The crystalline carbon may have a spherical, plate-like, fiber-like, tubular or powder form.

Preferably, pitch may be used as the first and second amorphous carbons. The pitch may be pitch with a softening point of 100 to 250 °C, and in particular, petroleum-based or coal-based pitch having the quinolone insoluble (QI) content of 5 wt% or less, more preferably 1 wt% or less, may be used.

Meanwhile, natural graphite may be preferably used as the crystalline carbon. The purity of the graphite may be high purity grades with a fixed carbon content of 99 wt% or more, more preferably 99.95 wt% or more.

In addition, flake graphite may be suitable for enhancing conductivity through contact with silicon.

In an embodiment, the step of mixing may be performed by a physical method.

The physical method may include at least one selected from the group consisting of high-energy processes such as milling, stirring, mixing, and compression.

For example, the step of mixing may be performed by ball milling. In particular, a planetary ball mill may efficiently mix and grind the mixture by mixing in a non-contact manner with functions of rotating and revolving.

Balls used in ball milling may be, for example, zirconia balls, etc., and there is no limitation on the type of balls, and the size of the balls may be, for example, about 0.3 to 10 mm, but is not limited thereto.

Meanwhile, the reaction time of the first and secondary mixing steps may be from 1 minute to 24 hours, the reaction temperature may be from 40 to 250 °C, and the reaction atmosphere may be the conditions of air or an inert atmosphere.

In an embodiment, the heat treating step may be performed in an inert atmosphere or under vacuum, and the heat treatment temperature can be 700 to 1,100 °C.

In addition, the heat treatment time is not particularly limited, but the heat treating may be performed in the range of, for example, 10 minutes to 48 hours.

The weight ratio of the precursor powder and the first amorphous carbon (weight of the precursor powder: weight of the first amorphous carbon) in the primary mixing step may be 75 to 85: 15 to 25.

In addition, the weight ratio of the primary composite, the second amorphous carbon, and crystalline carbon (weight of primary complex: weight of first amorphous carbon: weight of crystalline carbon) in the secondary mixing step may be 45 to 55: 15 to 25: 20 to 35.

When the weight ratio of the precursor powder and the first amorphous carbon and/or the weight ratio of the primary composite, the second amorphous carbon, and crystalline carbon exceeds or falls below the range of the present application, the initial efficiency, lifespan characteristics, and output characteristics may deteriorate when applying the negative electrode active material to a secondary battery.

An electrode according to still another aspect of the present application may include the negative electrode active material. A lithium secondary battery may have the electrode including the negative electrode active material as a negative electrode, and may include: a positive electrode positioned opposite to the negative electrode; and an electrolyte disposed between the negative electrode and the positive electrode.

The negative electrode includes the negative electrode active material, and may be manufactured, for example, by a method of preparing a negative electrode active material composition by mixing a negative electrode active material, a binder, and optionally a conductive agent in a solvent, and then molding the negative electrode active material composition into a predetermined shape or applying the composition to a current collector such as copper foil.

The negative electrode may additionally include negative electrode active materials commonly used as a negative electrode active material of a lithium battery in the relevant technical field in addition to the above-described negative electrode active material. Commonly used negative electrode active materials may include, for example, at least one selected from the group consisting of lithium metal, metals alloyable with lithium, transition metal oxides, non-transition metal oxides, and carbon-based materials.

For example, the metal that may be alloyed with the lithium above may be Si, Sn, Al, Ge, Pb, Bi, Sb a Si-Y alloy (wherein Y is an alkali metal, an alkaline earth metal, an element of group 13, an element of group 14, a transition metal, a rare earth element or a combination thereof, but not Si), and a Sn-Y alloy (wherein Y is an alkali metal, an alkaline earth metal, elements of group 13 to 16, a transition metal, a rare earth element or a combination thereof, and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxides may be lithium titanium oxides, vanadium oxides, lithium vanadium oxides, etc.

For example, the non-transition metal oxides may be $SnO_2$, $SiO_x$ $(0 < x \leq 2)$, etc. The carbon-based materials may be crystalline carbon, amorphous carbon, or a mixture thereof. The crystalline carbon may be graphite such as natural graphite or artificial graphite in the form of amorphous carbon, plate-like, flake-like, spherical or fiber-like, whereas the amorphous carbon may be soft carbon (low-temperature calcined carbon), hard carbon, mesophase pitch carbide, calcined coke, etc.

When the negative electrode active material and carbon-based material are used together, the oxidation reaction of the silicon-based active material is suppressed, an SEI film is effectively formed, a stable film is formed, and the electrical conductivity is improved, so that the charging/discharging characteristics of lithium may be further improved.

Common negative electrode active materials may be blended and mixed with the above-described negative electrode active material, coated on the surface of the above-described negative electrode active material, or used in any other combined form.

The binder used in the negative electrode active material composition is a component that assists in the bonding of the negative electrode active material and the conductive agent and the bonding to the current collector, and is added in an amount of 1 to 50 parts by weight based on 100 parts by weight of the negative electrode active material. For example, the binder may be added in an amount of 1 to 30 parts by weight, 1 to 20 parts by weight, or 1 to 15 parts by weight based on 100 parts by weight of the negative electrode active material.

Examples of binders include polyvinylidene fluoride, polyvinylidene chloride, polybenzimidazole, polyimide, polyvinyl acetate, polyacrylonitrile, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polystyrene, polymethyl methacrylate, polyaniline, acrylonitrile butadiene styrene, phenolic resin, epoxy resin, polyethylene terephthalate, polytetrafluoroethylene, polyphenylene sulfide, polyamide-imide, polyetherimide, polyethylene sulfone, polyamide, polyacetal, polyphenylene oxide, polybutylene terephthalate, ethylene-propylene-diene polymer (EPDM), sulfonated EPDM, styrene butadiene rubber, fluororubber, various copolymers.

The negative electrode may optionally further include a conductive agent to provide a conductive path to the negative electrode active material to further improve electrical conductivity.

As the conductive agent, anything that is generally used in lithium batteries may be used and examples include conductive materials including: carbon-based materials such as carbon black, acetylene black, Ketjen black, and carbon fibers (e.g., vapor-grown carbon fibers); metallic materials such as metal powders or metal fibers, such as copper, nickel, aluminum, and silver; and conductive polymers such as polyphenylene derivatives, or a mixture thereof. The content of the conductive agent may be appropriately adjusted and used. For example, the weight ratio of the negative electrode active material and the conductive agent may be in the range of 99:1 to 90:10.

As the solvent, N-Methylpyrrolidone (NMP), acetone, water, etc., may be used. The content of the solvent is 1 to 10 parts by weight based on 100 parts by weight of the negative electrode active material. When the content of the solvent is within the above range, the work for forming an active material layer is easy.

In addition, the current collector is generally made with a thickness of 3 to 500 $\mu$m. The current collector is not particularly limited as long as it is conductive and does not cause a chemical change in a battery, and for example, copper, stainless steel, aluminum, nickel, titanium, calcined carbon, copper or stainless steel surface-treated with carbon, nickel, titanium, silver, etc., aluminum-cadmium alloy, etc., may be used.

In addition, by forming fine irregularities on the surface of the current collector, the bonding strength of the negative electrode active material may be improved. The current collector may have various forms such as that of a film, a sheet, a foil, a net, a porous body, a foamed body, and a non-woven fabric.

The negative electrode plate may be produced by directly coating the prepared negative electrode active material composition on a current collector, or by casting the negative electrode active material composition on a separate support and laminating the negative electrode active material film peeled from the support onto a copper current collector. The negative electrode is not limited to the forms listed above and may have forms other than the above forms.

The negative electrode active material composition may be used not only for manufacturing electrodes for lithium secondary batteries, but may also be used for manufacturing printable batteries by being printed on a flexible electrode substrate.

Separately, a positive electrode active material composition is prepared by mixing a positive electrode active material, a conductive agent, a binder, and a solvent to manufacture the positive electrode.

As the positive electrode active material, any lithium-containing metal oxide commonly used in the relevant technical field may be used.

For example, a compound represented by any one of the following formulas: $Li_aA_{1-b}B_bD_2$ (wherein $0.90 \leq a \leq 1.8$, and $0 \leq b \leq 0.5$); $Li_aE_{1-b}B_bO_{2-c}D_c$ (wherein $0.90 \leq a \leq 1.8$, $0 \leq b \leq 0.5$, and $0 \leq c \leq 0.05$); $LiE_{2-b}B_bO_{4-c}D_c$ (wherein $0 \leq b \leq 0.5$, 0

$\leq c \leq 0.05$); $Li_aNi_{1-b-c}Co_bB_cD_\alpha$ (wherein $0.90 \leq a \leq 1.8$, $0 \leq b \leq 0.5$, $0 \leq c \leq 0.05$, $0 < \alpha \leq 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Ll_aNl_{1-b-c}Mn_bB_cD_\alpha$ (wherein $0.90 \leq a \leq 1.8$, $0 \leq b \leq 0.5$, $0 \leq c \leq 0.05$, $0 < \alpha \leq 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, $0 < \alpha < 2$); $Li_aNi_bE_cG_dO_2$ (wherein $0.90 \leq a \leq 1.8$, $0 \leq b \leq 0.9$, $0 \leq c \leq 0.5$, $0.001 \leq d \leq 0.1$); $Li_aNi_bCo_cMn_dGeO_2$ (wherein $0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ (wherein $0.90 \leq a \leq 1.8$, $0.001 \leq b \leq 0.1$); $Li_aCoG_bO_2$ (wherein $0.90 \leq a \leq 1.8$, $0.001 \leq b \leq 0.1$); $Li_aMnG_bO_2$ (wherein $0.90 \leq a \leq 1.8$, $0.001 \leq b \leq 0.1$); $Li_aMn_2G_bO_4$ (wherein $0.90 \leq a \leq 1.8$, $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the above formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

The compound may have a surface coating layer. Alternatively, a mixture of the compound and a compound having a coating layer may be used. The coating layer may include a compound of a coating element selected from oxide, hydroxide, oxyhydroxide, oxycarbonate, or hydroxycarbonate of the coating element. The compound constituting the coating layer may be amorphous or crystalline. As the coating element included in the coating layer, Mg, Al, Co, K, Na, Ca, Si, Ti, V, Sn, Ge, Ga, B, As, Zr or a mixture thereof may be used. The coating layer may be formed using a compound of these coating elements by any method that does not adversely affect the physical properties of the positive electrode active material. For example, spray coating, dipping, or any other suitable coating method. Thus, a detailed description thereof will be omitted herein.

For example, $LiNiO_2$, $LiCoO_2$, $LiMn_xO_{2x}(x = 1, 2)$, $LiNi_{1-x}Mn_xO_2$ $(0 < x < 1)$, $LiNi_{1-x-y}Co_xMn_yO_2$ $(0 \leq x \leq 0.5, 0 \leq y \leq 0.5)$, $LiFeO_2$, $V_2O_5$, TiS, MoS, etc., may be used.

In the positive electrode active material composition, the conductive agent, the binder and the solvent may be the same as those used in the negative electrode active material composition described above. In some cases, it is also possible to further add a plasticizer to the positive electrode active material composition and the negative electrode active material composition to create pores in electrode plates. The contents of the positive electrode active material, the conductive agent, the binder and the solvent are at levels typically used in lithium batteries.

The positive electrode current collector has a thickness of 3 to 500 $\mu$m, and is not particularly limited as long as it has high conductivity without causing chemical changes in the fabricated battery. Examples of the positive electrode current collector include stainless steel, aluminum, nickel, titanium, calcined carbon, or aluminum or stainless steel surface-treated with carbon, nickel, titanium, silver. The current collector may form fine irregularities on the surface thereof to improve adhesion to the positive electrode active material. The current collector may have various forms such as that of a film, a sheet, a foil, a net, a porous body, a foamed body, and a non-woven fabric.

The prepared positive electrode active material composition may be directly coated and dried on the positive electrode current collector to manufacture a positive electrode plate. Alternatively, the positive electrode active material composition may be cast on a separate support, and then the film obtained by peeling off the support may be laminated on the positive electrode current collector to manufacture a positive electrode plate.

The negative electrode and the positive electrode may be separated from each other by a separator. The separator may be any separator that is commonly used for lithium batteries. For example, a suitable separator may have low resistance to migration of ions in an electrolyte and possess an excellent electrolyte retention capability. Examples of a material for the separator include glass fiber, polyester, Teflon, polyethylene, polypropylene, polytetrafluoroethylene (PTFE), or a combination thereof, each of which may be a non-woven fabric or a woven fabric. The separator may have a pore diameter of about 0.01 $\mu$m to about 10 $\mu$m and a thickness of about 5 $\mu$m to about 300 $\mu$m.

A lithium salt-containing non-aqueous electrolyte consists of a non-aqueous electrolyte and a lithium. Examples of the non-aqueous electrolyte are a non-aqueous electrolyte solution, an organic solid electrolyte, an inorganic solid electrolyte, or the like.

As the non-aqueous electrolyte solution, an aprotic organic solvent may be used. Examples of the aprotic organic solvent are N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofurane, dimethyl sulfoxide, 1,3-dioxolane, formamide, dimethylformamide, acetonitrile, nitromethane, methyl formate, methyl acetate, triester of phosphoric acid, trimethoxy methane, a dioxolane derivative, sulfolane, methyl sulfolane, 1,3-dimethyl-2-imidazolidinone, a propylene carbonate derivative, a tetrahydrofuran derivative, ethers, methyl propylene propionate, and ethyl propionate.

Examples of the organic solid electrolyte may include a polyethylene derivative, a polyethylene oxide derivative, a polypropylene oxide derivative, a phosphate ester polymer, poly agitation lysine, polyester sulfide, polyvinyl alcohol, polyvinylidene fluoride, and a polymer containing an ionic dissociative group.

Examples of the inorganic solid electrolyte may include nitrides, halides, and sulfates of Li, such as $Li_3N$, LiI,

$Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

The lithium salt may be any one of suitable lithium salts commonly used in lithium secondary batteries and a material easily soluble in the non-aqueous electrolyte, for example, one or more of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic carboxylic acid lithium, lithium tetraphenyl borate, and imide may be used.

A lithium secondary battery may be categorized as a lithium ion battery, a lithium ion polymer battery, or a lithium polymer battery, according to the type of separator and/or electrolyte included therein. A lithium secondary battery may be classified as a cylindrical-type, rectangular-type, coin-type, or pouch-type, according to a shape thereof. A lithium secondary battery may also be classified as either a bulk-type or thin film-type, according to a size thereof.

A Method of manufacturing lithium secondary batteries may is widely known in this field, and thus a detailed description thereof is omitted.

Hereinafter, the present application will be described in more detail using examples and comparative examples, but the present application is not limited thereto.

[Example 1]

A pulverized ground silicon solution was prepared by mixing 5 parts by weight of silicon particles (mean diameter ($D_{50}$): 5 μm) and 95 parts by weight of isopropyl alcohol (IPA), placing the mixture in a bead mill, and grinding until the mean diameter ($D_{50}$) of the silicon particles becomes 110 nm.

After adding carbon nanotubes at a weight ratio of 3% relative to silicon particles to the prepared pulverized ground silicon solution, the solution was spray-dried to produce a silicon precursor having a mean diameter ($D_{50}$) of 6 μm.

The produced silicon precursor was put into a composite formation device (manufactured by Hansol Chemical) with petroleum pitch in a weight ratio of 80:20 to carry out the primary mixing to produce a primary composite, and then the primary composite was mixed with petroleum pitch and graphite in a weight ratio of 50:20:30 and placed in the same composite formation device to perform the secondary mixing to produce a secondary composite.

Afterwards, the secondary composite was heat-treated at 900 °C for 3 hours under an inert atmosphere to obtain a negative electrode active material.

[Example 2]

A negative electrode active material was manufactured in the same manner as in Example 1, except that the amount of carbon nanotubes added was 4% by weight relative to the silicon particles.

[Example 3]

A negative electrode active material was manufactured in the same manner as in Example 1, except that the amount of carbon nanotubes added was 2% by weight relative to the silicon particles.

[Example 4]

A negative electrode active material was manufactured in the same manner as in Example 1, except that the silicon precursor and petroleum pitch were mixed in a weight ratio of 85:15 in the primary mixing process, and the weight ratio of the primary composite, pitch, and graphite in the secondary mixing process was mixed in a weight ratio of 48:22:30.

[Example 5]

A negative electrode active material was manufactured in the same manner as in Example 1, except that the silicon precursor and petroleum pitch were mixed in a weight ratio of 75:25 in the primary mixing process, and the weight ratio of the primary composite, pitch, and graphite in the secondary mixing process was mixed in a weight ratio of 53:17:30.

[Comparative Example 1]

A negative electrode active material was manufactured in the same manner as in Example 1, except that carbon nanotubes were not added.

[Comparative Example 2]

A negative electrode active material was manufactured in the same manner as in Example 1, except that the weight ratio of silicon precursor, petroleum pitch and graphite is mixed at 43:27:30 and only the mixing process is performed (the primary mixing step of Example 1 is not performed, and only the secondary mixing step is performed by adjusting the weight ratio of the silicon precursor, petroleum pitch, and graphite).

[Comparative Example 3]

A negative electrode active material was manufactured in the same manner as in Example 1, except that the silicon precursor and petroleum pitch were mixed in a weight ratio of 95:5 in the primary mixing step, and the primary composite, pitch, and graphite were mixed in a weight ratio of 44:26:30 in the secondary mixing step.

[Comparative Example 4]

A negative electrode active material was manufactured in the same manner as in Example 1, except that the silicon precursor and petroleum pitch were mixed in a weight ratio of 70:30 in the primary mixing step, and the primary composite, pitch, and graphite were mixed in a weight ratio of 56:14:30 in the secondary mixing step.

[Preparation Example]

Manufacture of Coin Half-Cell

The negative electrode active materials manufactured in Examples 1 to 5 and Comparative Examples 1 to 4, a conductive material (Super P), and a binder (SBR-CMC) were uniformly mixed in a weight ratio of 94:2:4 to prepare a negative electrode slurry.
The prepared negative electrode slurry was coated on a copper thin film current collector having a thickness of 10 $\mu$m, and the coated electrode plate was dried at 120 °C for 20 minutes and then pressed to manufacture a negative electrode.
A CR2032-type coin half-cell was manufactured using the negative electrode, lithium metal as a counter electrode, a PE separator as a separator, and 1.0 M LiPF$_6$ dissolved in a mixed solvent of EC (ethylene carbonate): DEC (diethyl carbonate): DMC (dimethyl carbonate) (volume ratio) as an electrolyte.

Manufacture of Coin Full Cell

The negative electrode used in the above coin half-cell was used, and a positive electrode was manufactured as follows. After LiNi 0.6Co 0.2Mn 0.2O 2 as a positive electrode active material, a conductive agent (Super P), and a binder (PVDF) were mixed in a weight ratio of 95:2:3 to prepare a positive electrode slurry, the positive electrode slurry was coated on an aluminum foil current collector having a thickness of 12 $\mu$m, and the coated electrode plate was dried at 120 °C for 15 minutes and then pressed to manufacture the positive electrode.
A CR2032-type coin full cell was manufactured using the above positive and negative electrodes, a PE separator as a separator, and 1.5 M LiPF$_6$ dissolved in a mixed solvent of EC (ethylene carbonate): DEC (diethyl carbonate): DMC (dimethyl carbonate) (2:1:7 volume ratio) + FEC 5% as an electrolyte.

**Evaluation Example 1: Analysis of Negative Electrode Active Material**

The characteristics of the negative electrode active materials of Examples 1 to 5 and Comparative Examples 1 to 4 were analyzed and shown in Table 1 below.

[Table 1]

| | Negative electrode active material (composite) particle size (D50) ($\mu$m) | First shell carbon content (wt%) | Second shell carbon content (wt%) | Oxygen content (%) | Electrical Conductivity (S/cm) | Porosity (%) |
|---|---|---|---|---|---|---|
| | | | | | | |
| Example 1 | 7.14 | 21.7 | 31.5 | 5.1 | 18.8 | 27.3 |
| Example 2 | 7.20 | 21.7 | 32.0 | 5.6 | 19.2 | 28.7 |

(continued)

| | Negative electrode active material (composite) particle size (D50) (μm) | First shell carbon content (wt%) | Second shell carbon content (wt%) | Oxygen content (%) | Electrical Conductivity (S/cm) | Porosity (%) |
|---|---|---|---|---|---|---|
| Example 3 | 7.11 | 22.2 | 30.9 | 5.2 | 18.1 | 26.1 |
| Example 4 | 6.98 | 15.9 | 36.0 | 5.4 | 18.6 | 30.9 |
| Example 5 | 7.05 | 35.9 | 19.7 | 5.3 | 17.9 | 22.1 |
| Comparative Example 1 | 6.89 | 18.6 | 40.3 | 5.3 | 8.7 | 20.7 |
| Comparative Example 2 | 6.93 | N/A | 53.1 | 6.7 | N/A | 23.4 |
| Comparative Example 3 | 7.01 | 3.3 | 51.3 | 6.0 | 10.1 | 30.7 |
| Comparative Example 4 | 7.15 | 55.0 | 8.5 | 5.3 | 17.1 | 19.7 |

In Table 1 above, the particle size (D50) of the negative electrode active material (composite) was measured using a particle size measuring device (Mastersizer 3000, Malvern Panalytical) using organic solutions in which the negative electrode active materials of Examples 1 to 5 and Comparative Examples 1 to 4 were dispersed.

In addition, the particle size (D50) of the silicon particles used in the production of the negative electrode active materials of Examples 1 to 5 and Comparative Examples 1 to 4 was also measured in the same manner as the particle size measurement method of the negative electrode active material.

Meanwhile, the carbon contents of the first shells and the second shells of the negative electrode active materials of Examples 1 to 5 and Comparative Examples 1 to 4 were obtained by measuring the carbon content of each of the silicon precursor, primary composite, and negative electrode active material using ELEMENTRAC CS-i (ELTRA) to quantify the amount of carbon-containing gas such as carbon dioxide and carbon monoxide generated by combustion at high temperatures and multiplying the values calculated by the following Equations 1 and 2 by 100.

[Equation 1]

$$C_1 = \frac{M_1(1 - M_2)}{1 - M_1}$$

[Equation 2]

$$C_2 = M_2 - C_1$$

In the above Equations 1 and 2, $C_1$ represents the carbon content of the first shell, $C_2$ represents the carbon content of the second shell, $M_1$ represents the carbon content of the primary composite, and $M_2$ represents the carbon content of the negative electrode active material.

In the case of the negative electrode active materials of Examples 1 to 4 and Comparative Examples 1, 3 and 4, the carbon contents of the first shell and the second shell were calculated. However, the carbon content of the shell of Comparative Example 2, in which only one layer of shell was formed, was represented as the carbon content of the second shell.

The oxygen content was measured by using 836 Series (LECO) to quantify the amount of gas containing oxygen generated by burning the negative electrode active materials of Examples 1 to 5 and Comparative Examples 1 to 4 at high temperatures.

In addition, the electrical conductivity was measured by pelletizing the negative electrode active materials manufactured in Examples 1 to 5 and Comparative Examples 1, 3, and 4 and measuring the electrical conductivity of the powder by using a four-probe measurement method.

That is, after loading 500 mg of each negative electrode active material powder into a powder resistance measuring container, the generated electrical resistance was measured and converted into electrical conductivity. At this time, the negative electrode active material pellet was compressed and the electrical resistance was measured in real time.

Meanwhile, the porosity was calculated by the following Equation 3. In the following Equation 1, the true density was 2.33 g/cc. The total pore volume of the negative electrode active materials of Examples 1 to 5 and Comparative Examples 1 to 4 was measured using a TriStar II 3020 device from Micromeritics. The total pore volume was measured based on the amount of nitrogen gas adsorbed according to the change in relative pressure at liquid nitrogen temperature (77 K

[Equation 3]

$$porosity(\%) = \frac{\text{total pore volume (cc/g)}}{\frac{1}{\text{true density (g/cc)}} + \text{total pore volume}}$$

According to the measurement results shown in Table 1 above, through comparison of the negative electrode active materials of Examples 1 to 3, it was confirmed that as the content of carbon nanotubes increased, the electrical conductivity and porosity of the negative active material increased.

Meanwhile, the negative electrode active material of Comparative Example 1, which does not contain carbon nanotubes, had significantly lower electrical conductivity and porosity than the negative electrode active materials of Examples 1 to 3, which only differ in the content of carbon nanotubes.

In addition, through comparison of the negative active materials of Examples 1, 4, and 5, it was confirmed that the particle size, carbon shell content ratio, electrical conductivity, and porosity of the negative active materials could be adjusted by adjusting the weight ratio of the silicon precursor and petroleum pitch to 75~85:15~25 in the primary mixing process, and by adjusting the weight ratio of the primary composite, petroleum pitch, and graphite to 48~53:17~22:30 in the secondary mixing process.

Meanwhile, it was confirmed that the negative electrode active materials of Comparative Examples 3 and 4, in which the weight ratio of the silicon precursor and petroleum pitch in the primary mixing process and the weight ratio of the primary composite, petroleum pitch and graphite in the secondary mixing process were adjusted differently from that of the negative electrode active materials of Examples, had particularly lower electrical conductivity and lower porosity.

## Evaluation Example 2: Analysis of Battery Characteristics

The characteristics of cells using the negative electrode active materials of Examples 1 to 5 and Comparative Examples 1 to 4 were analyzed and shown in Table 2 below.

[Table 2]

| | Initial charge capacity (mAh/g) | Initial discharge capacity (mAh/g) | Initial Efficiency (%) | Lifespan (@200 cycles) | Output ($C_{5.0}/C_{0.1}$) |
|---|---|---|---|---|---|
| Example 1 | 1658.0 | 1460.7 | 88.1 | 81.1 | 68.7 |
| Example 2 | 1655.8 | 1457.1 | 88.0 | 80.7 | 69.1 |
| Example 3 | 1673.1 | 1462.3 | 87.4 | 80.3 | 66.1 |
| Example 4 | 1670.0 | 1467.9 | 87.9 | 79.8 | 69.3 |
| Example 5 | 1667.5 | 1462.4 | 87.7 | 79.9 | 67.2 |
| Comparative Example 1 | 1683.5 | 1437.7 | 85.4 | 76.1 | 47.3 |
| Comparative Example 2 | 1679.8 | 1463.1 | 87.1 | 71.1 | 51.7 |
| Comparative Example 3 | 1676.8 | 1457.1 | 86.9 | 69.4 | 55.3 |
| Comparative Example 4 | 1693.9 | 1434.7 | 84.7 | 73.7 | 48.7 |

The battery characteristics of the coin half-cell and coin full cell manufactured using the negative electrode active materials prepared in Examples 1 to 5 and Comparative Examples 1 to 4 were evaluated as follows.

The coin full cell was used to evaluate lifespan and output characteristics, and the coin half-cell was used to evaluate initial capacity, discharge capacity, and initial efficiency characteristics.

The coin half cells manufactured using the negative electrode active materials prepared in Examples 1 to 5 and Comparative Examples 1 to 4 were charged at a constant current of 0.1 C rate at 25 °C until the voltage reached 0.01 V (vs.

Li), and then charged at a constant voltage while maintaining 0.01 V until the current reached 0.05 C. After the fully charged cells were rested for 10 minutes and was discharged at a constant current of 0.1 C until the voltage reached 1.5 V (vs. Li) (performed twice, initial formation). The "C" refers to the discharge rate of the cell, a value obtained by dividing the total capacity of the cell by the total discharge time.

The coin full cells manufactured using the negative electrode active materials prepared in Examples 1 to 5 and Comparative Examples 1 to 4 were charged at a constant current of 0.1 C rate at 25 °C until the voltage reached 4.2 V (vs. Li), and then charged at a constant voltage while maintaining 4.2 V until the current reached 0.05 C. After the fully charged cells were rested for 10 minutes and was discharged at a constant current of 0.1 C until the voltage reached 2.7 V (vs. Li) (performed twice, initial formation).

Afterwards, the cells were charged at a constant current of 1.0 C rate at 25 °C until the voltage reached 4.2 V (vs. Li), and then charged at a constant voltage while maintaining 4.2 V until the current reached 0.05 C. After the fully charged coin cells were rested for 10 minutes, the discharging cycle was repeated with a constant current of 1.0 C until the voltage reached 2.7 V (vs. Li) (1st to 200th cycle).

Meanwhile, the initial charge capacities and initial discharge capacities in Table 2 are the charge and discharge capacities in the first cycle.

Initial efficiency, lifespan, and output characteristics were calculated from the following Equations 4 to 6.

Initial efficiency [%] = [Discharge capacity in 1st cycle/ Charge capacity in 1st cycle] x 100     <Equation 4>

Lifespan characteristics [%] = [Discharge capacity in 200th cycle/ Discharge capacity in 1st cycle] x 100     <Equation 5>

Output characteristics [%] = [Discharge capacity at 5.0 C/ Discharge capacity at 0.1 C] x 100     <Equation 6>

According to the measurement results shown in Table 2, the initial efficiency of the secondary batteries using the negative electrode active materials of Examples 1 to 5 exhibited an initial charge capacity of 1,658 to 1,673 mAh/g, an initial discharge capacity of 1,457.1 to 1,467.9 mAh/g, an initial efficiency of 87.4 to 88.1%, lifespan characteristics of 79.8 to 81.1%, and output characteristics of 67.2 to 69.1%.

In comparison, it was confirmed that the secondary battery using the negative electrode active material of Comparative Example 1, which does not contain carbon nanotubes, had lower initial discharge capacity, initial efficiency, lifespan characteristics, and output characteristics than the secondary batteries using the negative electrode active materials of Examples 1 to 5.

In addition, it was confirmed that the secondary battery using the negative electrode active material of Comparative Example 2, in which only the shell of the first layer was formed, had lower initial efficiency, lifespan characteristics, and output characteristics compared to the secondary batteries using the negative active materials of Examples 1 to 5.

Meanwhile, it was confirmed that the secondary batteries using the negative electrode active materials of Comparative Examples 3 and 4 , in which the weight ratio of the silicon precursor and petroleum pitch in the primary mixing process and the weight ratio of the primary composite, petroleum pitch, and graphite in the secondary mixing process were controlled differently from the negative electrode active materials of the examples, had lower initial efficiency, lifespan characteristics, and output characteristics compared to the secondary batteries using the negative electrode active materials of Examples 1 to 5.

The scope of the present disclosure is indicated by the appended claims rather than the detailed description above, and the meaning and scope of the claims, and any changes or modifications derived from the concept of equivalents thereof should be construed as being included in the scope of the present disclosure.

## Industrial Applicability

According to a negative electrode active material of the present disclosure, a secondary battery with excellent initial efficiency, lifespan characteristics and output characteristics can be provided.

Furthermore, a negative electrode active material may be manufactured with high efficiency and low cost.

## Claims

1. A negative electrode active material comprising:

a core including at least one metal-containing particle,
a first shell surrounding the core; and
a second shell surrounding the first shell,
wherein the metal-containing particle includes at least any one selected from the group consisting of Mg, Al, Si, Ca, Fe, Mg, Mn, Co, Ni, Zn, and Ge.

2. The negative electrode active material of claim 1, wherein the metal-containing particle is a silicon (Si)-containing particle.

3. The negative electrode active material of claim 1, wherein the core includes at least one nano carbon particle.

4. The negative electrode active material of claim 3, wherein the nano carbon particle is included in an amount of 0.5 wt% or more and 10 wt% or less based on 100 wt% of a total weight of the metal-containing particles.

5. The negative electrode active material of claim 1, wherein a carbon content is 30 wt% or more and 85 wt% or less based on 100 wt% of a total weight of the negative electrode active material.

6. The negative electrode active material of claim 1, wherein the first shell includes amorphous carbon, and the second shell includes crystalline carbon.

7. The negative electrode active material of claim 1, wherein an oxygen content is 10 wt% or less based on 100 wt% of a total weight of the negative electrode active material.

8. The negative electrode active material of claim 1, wherein a carbon content of the first shell is 15 wt% or more and 40 wt% or less based on 100 wt% of a total weight of the negative electrode active material, and a carbon content of the second shell is 15 wt% or more and 40 wt% or less based on the total weight of the negative electrode active material.

9. The negative electrode active material of claim 1, wherein the first shell further includes at least one metal-containing particle.

10. The negative electrode active material of claim 1, wherein an electrical conductivity of the negative electrode active material is 17 S/cm or more and 20 S/cm or less, and porosity of the negative electrode active material is 20% or more and 35% or less.

11. A method for preparing the negative electrode active material of any one of claims 1 to 10, the method comprising:

   producing a precursor powder by spray drying a solution containing a metal-containing particle and a nano carbon particle;
   primary mixing in which the precursor powder and a first amorphous carbon are mixed to produce a primary composite;
   secondary mixing in which the primary composite, a second amorphous carbon, and crystalline carbon are mixed to produce a secondary composite; and
   heat treating,
   wherein a metal contained in the metal-containing particle is at least one selected from Si, Al, Ti, Mn, Ni, Cu, V, Zr, Mn, Co, Fe and Nb.

12. The method of claim 11, wherein a weight ratio of the precursor powder and the first amorphous carbon in the primary mixing step (weight of the precursor powder: weight of the first amorphous carbon) is 75 to 85: 15 to 25, and a weight ratio of the primary composite, the second amorphous carbon, and the crystalline carbon in the secondary mixing step (weight of the primary composite, weight of the first amorphous carbon, and weight of the crystalline carbon) is 45 to 55: 15 to 25: 20 to 35.

13. An electrode comprising the negative electrode active material of any one of claims 1 to 10.

14. A lithium secondary battery comprising:

   a negative electrode including the negative electrode active material of any one of claims 1 to 10;
   a positive electrode positioned opposite to the negative electrode; and

an electrolyte disposed between the negative electrode and the positive electrode is provided.

Figure 1

## INTERNATIONAL SEARCH REPORT

| International application No. |
|---|
| **PCT/KR2023/018510** |

**A.    CLASSIFICATION OF SUBJECT MATTER**

**H01M 4/36**(2006.01)i; **H01M 4/38**(2006.01)i; **H01M 4/62**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); C01B 32/05(2017.01); H01M 10/052(2010.01); H01M 4/02(2006.01); H01M 4/133(2010.01); H01M 4/58(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(anode active material), 실리콘(silicon), 금속(metal), 입자(particle), 코어(core), 쉘(shell), 코팅(coating), 비정질 탄소(amorphous carbon), 결정질 탄소(crystalline carbon), 전기 전도도(electric conductivity), 공극(porosity)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2015-0063620 A (KNU-INDUSTRY COOPERATION FOUNDATION) 10 June 2015 (2015-06-10)<br>See paragraphs [0048], [0054], [0058]-[0060], [0063], [0064], [0092], [0104]-[0107] and [0124]-[0131]; and figures 3 and 5. | 1-14 |
| A | KR 10-2376217 B1 (GRAPSIL CO., LTD.) 18 March 2022 (2022-03-18)<br>See claims 7-9, 11, 13 and 14. | 1-14 |
| A | KR 10-2006-0069738 A (SAMSUNG SDI CO., LTD.) 22 June 2006 (2006-06-22)<br>See claims 1-17. | 1-14 |
| A | KR 10-2021-0149970 A (DAE JOO ELECTRONIC MATERIALS CO., LTD.) 10 December 2021 (2021-12-10)<br>See claims 1-30. | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 February 2024** | **28 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/018510**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0126857 A (SAMSUNG ELECTRONICS CO., LTD. et al.) 02 November 2016 (2016-11-02)<br>    See claims 1-34. | 1-14 |

Form PCT/ISA/210 (second sheet) (July 2022)

**INTERNATIONAL SEARCH REPORT**
Information on patent family members

International application No.

**PCT/KR2023/018510**

| Patent document cited in search report | | | Publication date (day/month/year) | Patent family member(s) | | | Publication date (day/month/year) |
|---|---|---|---|---|---|---|---|
| KR | 10-2015-0063620 | A | 10 June 2015 | KR | 10-2114044 | B1 | 25 May 2020 |
| KR | 10-2376217 | B1 | 18 March 2022 | CN | 116830304 | A | 29 September 2023 |
| | | | | WO | 2023-008866 | A1 | 02 February 2023 |
| KR | 10-2006-0069738 | A | 22 June 2006 | CN | 100421290 | C | 24 September 2008 |
| | | | | CN | 1790779 | A | 21 June 2006 |
| | | | | JP | 2006-173121 | A | 29 June 2006 |
| | | | | JP | 4790402 | B2 | 12 October 2011 |
| | | | | KR | 10-0738054 | B1 | 12 July 2007 |
| | | | | US | 2006-0134516 | A1 | 22 June 2006 |
| | | | | US | 8029931 | B2 | 04 October 2011 |
| KR | 10-2021-0149970 | A | 10 December 2021 | | None | | |
| KR | 10-2016-0126857 | A | 02 November 2016 | AU | 2013-217061 | A1 | 21 August 2014 |
| | | | | BR | 112014019342 | A2 | 20 June 2017 |
| | | | | CA | 2863234 | A1 | 15 August 2013 |
| | | | | CN | 104185481 | A | 03 December 2014 |
| | | | | CN | 106067544 | A | 02 November 2016 |
| | | | | CN | 106691363 | A | 24 May 2017 |
| | | | | EP | 2812044 | A2 | 17 December 2014 |
| | | | | EP | 3086388 | A1 | 26 October 2016 |
| | | | | HK | 1204587 | A1 | 27 November 2015 |
| | | | | IN | 7493DEN2014 | A | 24 April 2015 |
| | | | | JP | 2015-505515 | A | 23 February 2015 |
| | | | | KR | 10-2014-0128399 | A | 05 November 2014 |
| | | | | KR | 10-2023-0096930 | A | 30 June 2023 |
| | | | | US | 10149934 | B2 | 11 December 2018 |
| | | | | US | 10263245 | B2 | 16 April 2019 |
| | | | | US | 11389638 | B2 | 19 July 2022 |
| | | | | US | 2014-0051908 | A1 | 20 February 2014 |
| | | | | US | 2016-0287771 | A1 | 06 October 2016 |
| | | | | US | 2016-0315311 | A1 | 27 October 2016 |
| | | | | US | 2019-0060543 | A1 | 28 February 2019 |
| | | | | US | 2021-0128901 | A1 | 06 May 2021 |
| | | | | US | 2022-0193314 | A9 | 23 June 2022 |
| | | | | US | 9339597 | B2 | 17 May 2016 |
| | | | | WO | 2013-119752 | A2 | 15 August 2013 |

Form PCT/ISA/210 (patent family annex) (July 2022)

**EP 4 621 873 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160104720